# EUROPÄISCHE PATENTSCHRIFT

(11) **EP 1 740 286 B1**
(45) Veröffentlichungstag und Bekanntmachung des Hinweises auf die Patenterteilung: **18.03.2009**
(21) Anmeldenummer: 05706946.0
(22) Anmeldetag: 21.01.2005
(51) Int. Cl.: B01D 33/04, B07B 1/10

(54) **SIEBRECHEN**
SCREENING GRID
GRILLE DE CRIBLAGE

(30) Priorität: 19.03.2004 DE 102004014022
(43) Veröffentlichungstag der Anmeldung: 10.01.2007
(73) Patentinhaber: Grammelsberger, Axel, 63110 Rodgau (DE)
(72) Erfinder: Grammelsberger, Axel, 63110 Rodgau (DE)
(74) Vertreter: Katscher Habermann Patentanwälte
(86) Internationale Anmeldenummer: PCT/EP2005/000573
(87) Internationale Veröffentlichungsnummer: WO 2005/097290

(56) Entgegenhaltungen:
- EP-A- 0 542 191
- EP-A- 0 578 559
- WO-A-99/50510
- DE-A1- 2 401 956
- US-A- 4 188 294
- US-A- 5 059 313

## Beschreibung

Die Erfindung betrifft einen Siebrechen zum Austrag von Feststoffen aus einem Flüssigkeitsstrom, mit einem antreibbaren, in den Flüssigkeitsstrom einsetzbaren Siebband, das zwei seitliche Gliederketten aufweist, zwischen denen sich Tragstangen erstrecken, und das mindestens teilweise mit Haken (22) versehene Siebglieder (15) aufweist, wobei sämtliche Siebglieder (15) in Gruppen von nebeneinander angeordneten Siebgliedern (15) aufgeteilt sind und wobei jede Gruppe von Siebgliedern auf zwei Tragstangen unabhängig von der vorangehenden und der nachfolgende Gruppe von Siebgliedern angeordnet ist und die Siebglieder über die Tragstangen auskragende Gliedfortsätze aufweisen.

Derartige Siebrechen dienen dazu, Flüssigkeiten von mitgeführten Feststoffen mechanisch zu reinigen, die eine vorgegebene Partikelgröße überschreitet. Ein typischer Anwendungsbereich ist die Reinigung von Abwässern vor der Behandlung in Kläranlage

Hierzu sind Siebrechen oder Filterrechen in unterschiedlicher Bauart bekannt. Überwiegend weisen diese Siebrechen ein nach Art eines Paternosters endlos umlaufendes, angetriebenes Siebband auf, das aus einzelnen Siebgliedern besteht, die mit ihren Zwischenräume die vom Flüssigkeitsstrom, beispielsweise Abwasserstrom durchströmte Siebfläche bilden. Mindestens einige Siebglieder sind mit Haken versehen, die dazu dienen bei einer angetriebenen Bewegung des Siebbandes die angeschwemmten Feststoffe mitzunehmen und aus dem Flüssigkeitsstrom auszutragen. Am Kopf des Siebbandes werden die Feststoffe auf einer Abfördereinrichtung abgeworfen. Um festhaftende Stoffe zu entfernen, kann beispielsweise eine drehangetriebene Bürste vorgesehen sein.

Es sind verschiedene Siebrechen bekannt (EP 0 542 191 A1, DE 24 01 956. A1 oder EP 0 578 559 A1), bei welchen mehrere Siebglieder jeweils versetzt, bzw. gestaffelt über benachbarte Tragstangen hinweg angeordnet und dabei schwenkbar gelagert jeweils zwei benachbarte Tragstangen miteinander verbinden. Durch die versetzte, bzw. gestaffelte Anordnung der Siebglieder müssen für eine Entnahme eines einzelnen beschädigten Siebglieds nicht nur die dieses Siebglied tragenden Tragstangen gelöst werden, sondern auch die sich zu den benachbarten Tragstangen erstreckenden Siebglieder teilweise gelöst werden, was mit einem erheblichen Aufwand verbunden ist. Es gibt keine Gruppe von Siebgliedern, die in einfacher Weise und unabhängig von benachbarten Siebgliedern aus dem Siebband herausgelöst werden könnte, um den Ersatz eines einzelnen beschädigten Siebglieds zu ermöglichen.

Bei einem bekannten Siebrechen der eingangs genannten Gattung (EP 0 581 770 B1) weist das Siebband zwei seitliche Gliederketten auf, zwischen denen sich Tragstangen erstrecken, die Gruppen von nebeneinander angeordneten, mindestens teilweise mit Haken versehenen Siebgliedern tragen, wobei jede Gruppe von Siebgliedern auf zwei Tragstangen unabhängig von der vorangehenden und der nachfolgenden Gruppe von Siebgliedern angeordnet ist. Die auskragenden Gliedfortsätze der Siebglieder benachbarter Gruppen greifen kammartig ineinander und bilden die Siebfläche zwischen benachbarten Gruppen von Siebgliedern. Bei der Umlenkbewegung am oberen und unteren Ende des Siebbandes müssen die Gliedfortsätze der beiden benachbarten Gruppen von Siebgliedern relativ zueinander eine Schwenkbewegung ausführen. Die dabei auftretende Scherenwirkung zwischen benachbarten Gliedfortsätzen kann dazu führen, dass Feststoffe, insbesondere harte oder langfaserige Stoffe, zwischen den sich scherenartig bewegenden Gliedfortsätzen eingeklemmt werden, wodurch die Funktion des Siebrechens beeinträchtigt werden kann.

Da die Spaltweite des Siebrechens durch den Abstand der kammartig ineinander greifenden Gliedfortsätze im Bereich zwischen zwei Gruppen von Siebgliedern bestimmt wird, müssen zwischen benachbarten Siebgliedern der selben Gruppe im Bereich zwischen den beiden Tragstangen zusätzliche Zwischensiebglieder angeordnet werden, die keine Gliedfortsätze tragen. Durch die Notwendigkeit, zwei verschiedene Arten von Siebgliedern bereitzustellen, wird der Aufwand bei der Herstellung und bei der Reparatur des Siebrechens wesentlich erhöht.

Aufgabe der Erfindung ist es daher, einen Siebrechen der eingangs genannten Gattung so auszubilden, dass er nur eine einzige Art von Siebgliedern aufweist und dass Störungen durch das Einklemmen von Feststoffen infolge einer scherenartigen Bewegung der Gliedfortsätze vermieden werden.

Diese Aufgabe wird erfindungsgemäß dadurch gelöst, dass alle Siebglieder auskragende Gliedfortsätze aufweisen, die sich jeweils nur in einer Richtung von einer Gruppe von Siebgliedern weg erstrecken und ohne Überlappung mit Gliedfortsätzen der benachbarten Gruppe von Siebgliedern angeordnet sind.

Da ein Überlappen oder kammartiges Ineinandergreifen von Gliedfortsätzen vermieden wird, findet auch keine scherenartige Bewegung statt, die zu einem Einklemmen von Feststoffen führen könnte. Die Spaltweite des Siebrechens wird sowohl innerhalb jeder Gruppe von Siebgliedern als auch im Bereich zwischen benachbarten Gruppen ausschließlich durch den gegenseitigen Abstand der Siebglieder bestimmt, die alle einheitlich sind. Zusätzliche Zwischensiebglieder ohne Gliedfortsätze sind nicht erforderlich. Dadurch werden der Fertigungsaufwand und der Reparaturaufwand wesentlich verringert. Die zu Paketen von Siebgliedern zusammengefassten Gruppen können in einfacher Weise komplett ausgewechselt werden, wenn dies erforderlich ist.

Der Siebrechen kann so ausgeführt werden, dass alle Siebglieder einer Gruppe mit an der Außenseite des Siebbandes vorspringenden Haken versehen sind. Stattdessen ist es auch möglich, zwischen mit Haken versehenen Gruppen von Siebgliedern eine oder mehrere Gruppen von Siebgliedern ohne Haken anzuordnen. In jedem Fall ist der seitliche Abstand der Haken gleich dem seitlichen Abstand der Siebglieder zueinander. Damit ist die Spaltweite zwischen den Haken gleich der Spaltweite des Siebbandes. Dadurch ist sichergestellt, dass alle Feststoffe, die von dem Siebrechen zurückgehalten werden, auch bei der Austragbewegung mitgenommen werden und nicht zum Boden durchfallen, wo sie eine Feststoffansammlung bilden würden, die regelmäßig entfernt werden müsste.

Zweckmäßigerweise ist jeder auskragende Gliedfortsatz als ein sich zur Innenseite des Siebbandes verbreiternder Kreissektor ausgeführt, dessen Kreisbogen-Mittelpunkt in der Achse der zugeordneten Tragstange liegt. Dadurch wird erreicht, dass sich auch im Bereich der Umlenkung des Siebbandes keine Öffnung zwischen benachbarten Gruppen von Siebgliedern auftritt, sondern die gleichmäßige Spaltweite des Siebes aufrechterhalten bleibt.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 einen beispielsweise in einem Abwasserstrom angeordneten Siebrechen in vereinfachter Darstellungsweise in einem senkrechten Schnitt,
Fig. 2 eine vergrößerte Teilansicht in Richtung des Pfeils II in Fig. 1,
Fig. 3 eine Ansicht in Richtung des Pfeils III in Fig. 2,
Fig. 4 ein einzelnes Siebglied in einer Seitenansicht,
Fig. 5 das Siebglied nach Fig. 4 in einer Ansicht in Richtung des Pfeils V und
Fig. 6-8 andere Ausführungen von Siebgliedern jeweils in einer Seitenansicht entsprechend der Fig. 4.

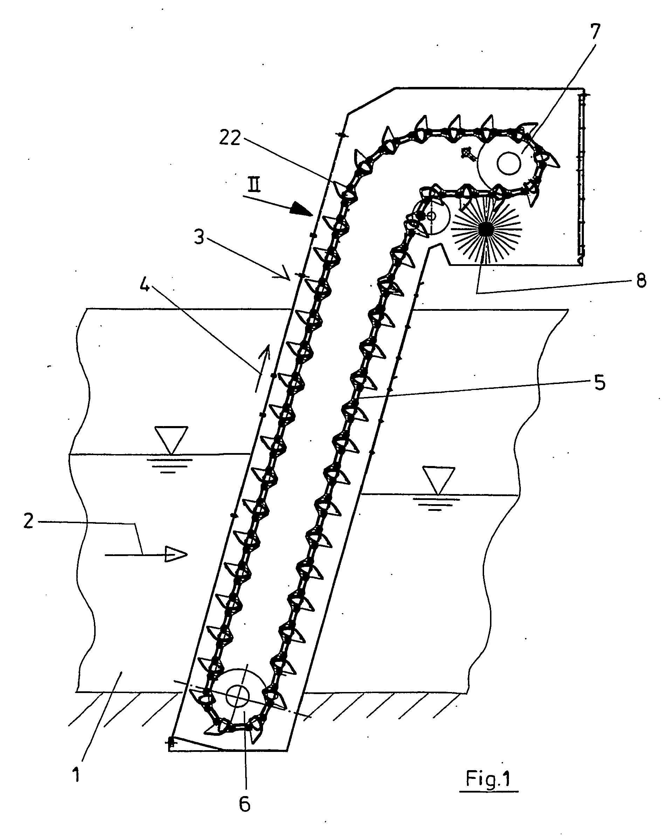

Der in Fig. 1 dargestellte Siebrechen dient zum Austrag von Feststoffen, insbesondere auch größeren Körpern, aus einem in einem Abwasserkanal 1 in Richtung des Pfeils 2 strömenden Flüssigkeitsstrom, beispielsweise einem Abwasserstrom. Der Siebrechen 3 ragt mit seinem unteren Abschnitt in den Abwasserstrom und erstreckt sich von dort schräg nach oben über den Abwasserkanal 1 hinaus. Der Siebrechen weist ein kontinuierlich oder intermittierend in Richtung des Pfeils 4 antreibbares Siebband 5 auf, das über eine untere Umlenkrolle 6 und eine obere Umlenkrolle 7 geführt ist, die von einem (nicht dargestellten) Bandantrieb angetrieben wird.

Der Abwurf der Feststoffe erfolgt durch die Schwerkraft. Dies kann durch eine - möglicherweise angetriebene - Bürstwalze 8 und erforderlichenfalls eine (nicht dargestellte) Spüleinrichtung unterstützt werden.

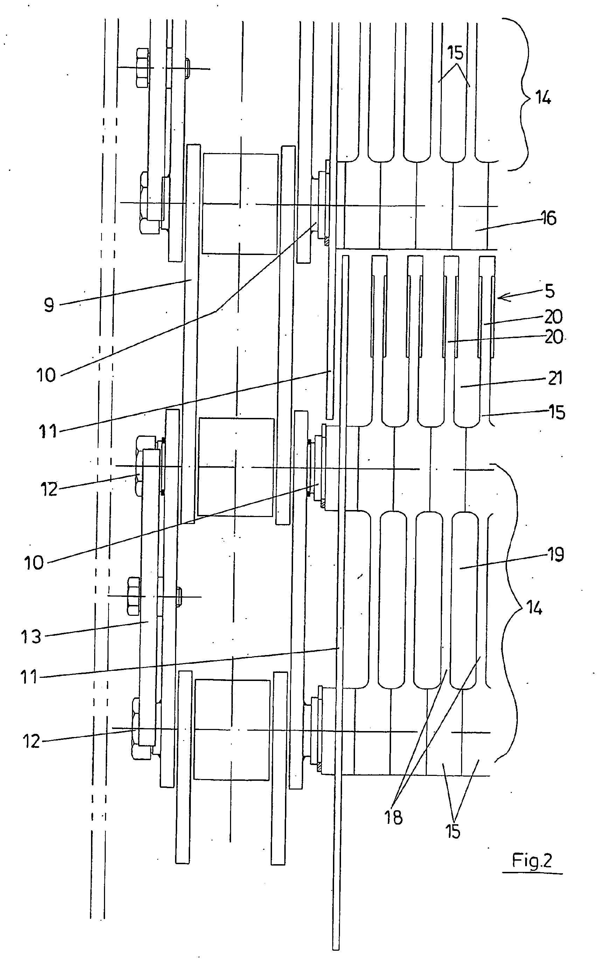

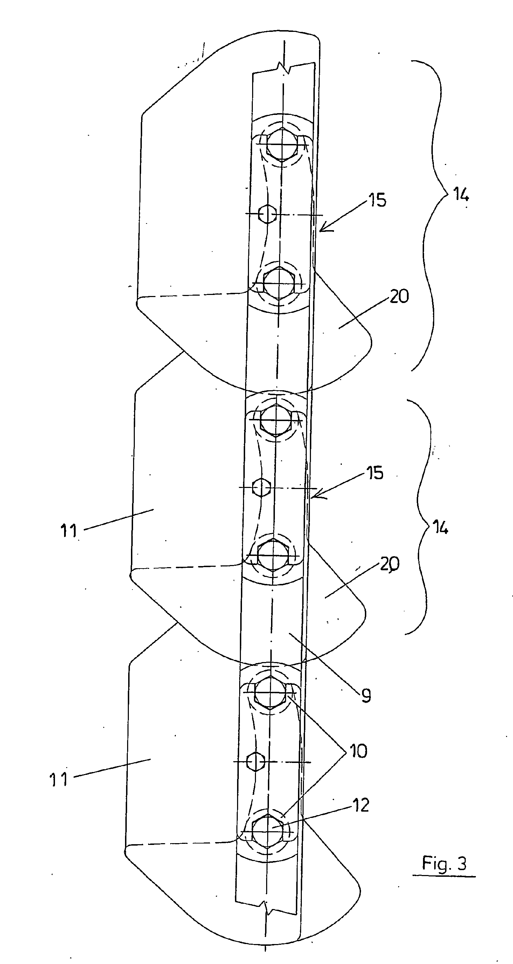

Wie in den Fig. 2 und 3 in Einzelheiten dargestellt, weist das Siebband 5 zwei seitliche Gliederketten 9 auf, die über die Umlenkrollen 6 und 7 laufen. Zwischen den beiden Gliederketten 9 erstrecken sich in regelmäßigen Abständen Tragstangen 10, auf denen unmittelbar neben den Gliederketten 9 flache Seitenbegrenzungsplatten 11 angeordnet sind, die gemeinsam eine seitliche Begrenzung auf beiden Längsseiten des Siebbandes 5 bilden.

Die Tragstangen 10 sind mittels Verbindungsmitteln 12 (Schrauben, Bolzen od.dgl.) lösbar mit der Gliederkette 9 verbunden. Die Verbindungsmittel 12 können durch Sicherungselemente 13 gesichert werden.

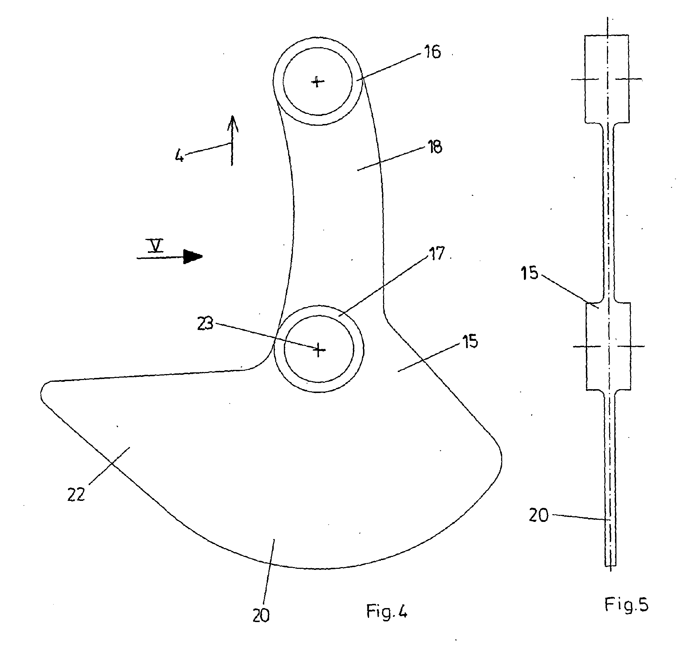

Jeweils zwei Tragstangen 10 tragen gemeinsam eine Gruppe 14 von Siebgliedern 15 (Fig. 4 und 5). Jedes Siebglied 15 weist zwei Lageraugen 16, 17 auf, die auf den Tragstangen 10 aufgenommen und durch einen Mittelabschnitt 18 miteinander verbunden sind. Wie man aus Fig. 2 erkennt, ragen die Lageraugen 16 beiderseits soweit vor, dass zwischen den Mittelabschnitten 18 benachbarter Siebglieder 15 jeweils ein Siebspalt 19 gebildet wird, dessen Spaltweite bestimmt, ab welcher Größe Feststoffteile ausgesiebt werden.

Alle Siebglieder 15 weisen auskragende Gliedfortsätze 20 auf, die sich jeweils nur in eine Richtung von einer Gruppe 14 von Siebgliedern 15 weg erstrecken und dort über die Tragstange 10 hinausragen. Der zwischen benachbarten Gliedfortsätzen 20 gebildete Spalt 21 ist ebenso breit wie der Spalt 19 zwischen den Mittelabschnitten 18 benachbarter Siebglieder 15. Im montierten Zustand ragen die Gliedfortsätze 20 bis in einen geringen Abstand zu den Lageraugen 16 der benachbarten Gruppe 14 von Siebgliedern 15.

Alle Gliedfortsätze 20 erstrecken sich jeweils nur in einer Richtung von einer Gruppe 14 von Siebgliedern 15 weg und überlappen sich nicht mit Gliedfortsätzen 20 der jeweils benachbarten Gruppe 14.

Bei dem in den Fig. 1-5 dargestellten Ausführungsbeispiel sind alle Siebglieder 15 einer Gruppe 14 mit an der Außenseite des Siebbandes 5 vorspringenden Haken 22 versehen. Jeder Haken 22 ist jeweils an dem auskragenden Gliedfortsatz 20 ausgebildet. Bei der kontinuierlichen oder intermittierenden angetriebenen Bewegung des Siebbandes 5 nehmen die Haken 22 die durch das Siebband zurückgehaltenen Feststoffe auf und fördern Sie zum Kopf des Siebbandes 5.

Jeder auskragende Gliedfortsatz 20 ist als Kreissektor ausgeführt, der sich zur Innenseite des Siebbandes 5 hin verbreitert. Der Kreisbogen-Mittelpunkt 23 (Fig. 4) des Kreissektors liegt in der Mitte des Lagerauges 17 und damit im montierten Zustand auf der Achse der zugeordneten Tragstange 10. Dadurch wird erreicht, dass sich auch bei einer Schwenkbewegung der Siebglieder 15 beim Lauf über die Umlenkrollen 6 und 7 kein größerer Spalt zwischen den Siebgliedern 15 benachbarter Gruppen 14 öffnet und insbesondere keine Scherenbewegung erfolgt, durch die Feststoffe eingeklemmt werden könnten.

Bei der in Fig. 3 dargestellten Anordnung sind die Siebglieder 15 benachbarter Gruppen gegeneinander um die halbe Teilung, d.h. die halbe Breite der Siebglieder 15 gegeneinander versetzt. Stattdessen ist es auch möglich, die Siebglieder 15 aufeinander folgender Gruppen 14 so anzuordnen, dass die Siebglieder 15 miteinander fluchten.

Bei dem dargestellten Ausführungsbeispiel sind die Siebglieder 15 unmittelbar nebeneinander auf den Tragstangen 12 angeordnet. Ihre Lageraugen 16, 17 bilden jeweils seitlich vorspringende Distanzhülsen. Stattdessen ist es auch möglich, die Siebglieder 15 flach auszuführen und benachbarte Siebglieder 15 durch gesonderte Distanzhülsen voneinander zu trennen.

Das in Fig. 4 dargestellte Siebglied 15 wird in der Siebkette 5 so angeordnet, dass der den Haken 22 tragende Gliedfortsatz 20 bei der Förderbewegung in Richtung des Pfeils 4 nachläuft.

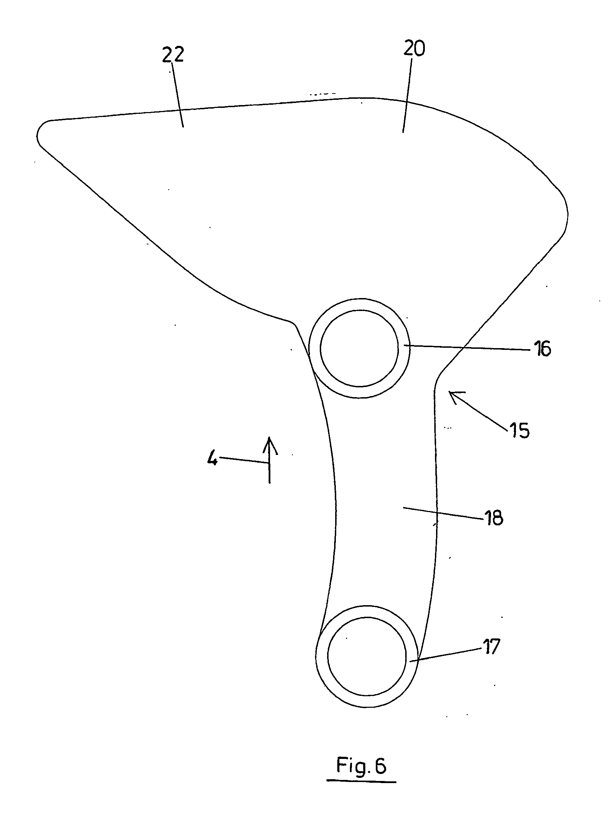

Hiervon unterscheidet sich das in Fig. 6 dargestellte Siebglied 15 nur dadurch, dass der Gliedfortsatz 20 bei Bewegung in Richtung des Pfeils 4 vorausläuft, wobei hier der vorauslaufende Gliedfortsatz 20 den Haken 22 trägt.

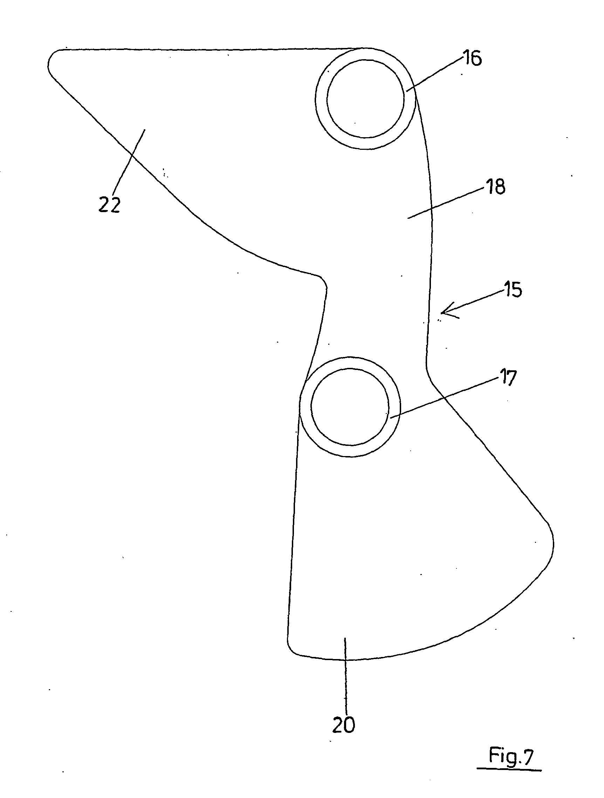

Im Gegensatz dazu ist bei der Ausführung des Siebgliedes 15 gemäß Fig. 7 der Haken 22 an dem die beiden Tragstangen überbrückenden Mittelabschnitt 18 ausgebildet.

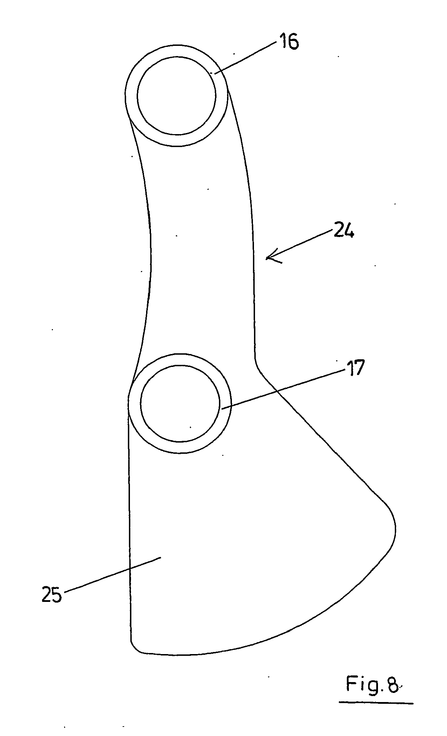

Fig. 8 zeigt ein Siebglied 24 ohne Haken. Das Siebglied 23 weist ebenfalls einen Gliedfortsatz 25 auf. Derartige Siebglieder 23 ohne Haken werden ebenfalls nebeneinander zu Gruppen auf jeweils zwei Tragstangen 10 zusammengefasst. Zwischen mit Haken 22 versehenen Gruppen 14 von Siebgliedern 15 können eine oder mehrere Gruppen von Siebgliedern 23 ohne Haken angeordnet sein.

Die Spaltweite des Siebbandes 5 bleibt bei der Verwendung aller dargestellten Siebglieder in allen Material tragenden (mit Austragsmaterial behafteten) Bewegungsstellungen des Siebbandes gleich. Auch bei der Umlenkung des Siebbandes um die Umlenkrollen 6 und 7 klaffen keine größeren Öffnungen, in denen sich Feststoffkörper festklemmen könnten. Die Filterelemente können durch ihre Form so angepasst werden, dass an keiner Stelle der Umlenkungen eine größere Öffnung im Siebband klafft. Da alle Tragstangen 12 gleich lang sind, können die einzelnen Gruppen 14 von Siebgliedern 14 zu Reparaturzwecken leicht paketweise ausgetauscht werden.

Abweichend von den dargestellten Ausführungsbeispielen kann auch vorgesehen sein, dass auf jeweils einer Tragestange 12 nebeneinander abwechselnd Siebglieder mit und ohne Austragshaken angeordnet sind.

## Patentansprüche

1. Siebrechen zum Austrag von Feststoffen aus einem Flüssigkeitsstrom, mit einem antreibbaren, in den Flüssigkeitsstrom einsetzbaren Siebband (5), das zwei seitliche Gliederketten (9) aufweist, zwischen denen sich Tragstangen (10) erstrecken, und das mindestens teilweise mit Haken (22) versehene Siebglieder (15) aufweist, wobei sämtlich Siebglieder (15) in Gruppen von nebeneinander angeordneten Siebgliedern (15) aufgeteilt sind und wobei jede Gruppe von Siebgliedern (15) auf zwei Tragstangen (10) unabhangig von der vorangehenden und der nachfolgenden Gruppe (14) von Siebgliedern (15) angeordnet ist und die Siebglieder (15) über die Tragstangen (10) auskragende Gliedfortsätze (20) aufweisen, **dadurch gekennzeichnet, dass** alle Siebglieder (15) auskragende Gliedfortsätze (20) aufweisen, die sich jeweils nur in einer Richtung von einer Gruppe (14) von Siebgliedern (15) weg erstrecken und ohne Überlappung mit Gliedfortsätzen (20) der benachbarten Gruppe (14) von Siebgliedern (15) angeordnet sind.

2. Siebrechen nach Anspruch 1, **dadurch gekennzeichnet, dass** alle Siebglieder (15) einer Gruppe (14) mit an der Außenseite des Siebbandes (5) vorspringenden Haken (22) versehen sind.

3. Siebrechen nach Anspruch 2, **dadurch gekennzeichnet, dass** die Haken (22) an den auskragenden Gliedfortsätzen (20) ausgebildet sind.

4. Siebrechen nach Anspruch 2, **dadurch gekennzeichnet, dass** die Haken (22) an den die beiden Tragstangen (12) überbrückenden Mittelabschnitten (18) der Siebglieder (15) ausgebildet sind.

5. Siebrechen nach Anspruch 1, **dadurch gekennzeichnet, dass** zwischen mit Haken (22) versehenen Gruppen (14) von Siebgliedern (15) eine oder mehrere Gruppen von Siebgliedern (24) ohne Haken angeordnet sind.

6. Siebrechen nach einem der Ansprüche 1-5, **dadurch gekennzeichnet, dass** jeder auskragende Gliedfortsatz (20) als ein sich zur Innenseite des Siebbandes (5) verbreiternder Kreissektor ausgeführt ist, dessen Kreisbogen-Mittelpunkt (23) in der Achse der zugeordneten Tragstange (12) liegt.

7. Siebrechen nach einem der Ansprüche 1-6, **dadurch gekennzeichnet, dass** die Siebglieder (15) benachbarter Gruppen (14) miteinander fluchten.

8. Siebrechen nach einem der Ansprüche 1-6, **dadurch gekennzeichnet, dass** die Siebglieder (15) benachbarter Gruppen (14) gegeneinander um die halbe Teilung der Siebglieder (15) versetzt sind.

9. Siebrechen nach einem der Ansprüche 1-8, **dadurch gekennzeichnet, dass** die Siebglieder (15) unmittelbar nebeneinander auf den Tragstangen (12) angeordnet sind und jeweils seitliche Distanzhülsen aufweisen.

10. Siebrechen nach einem der Ansprüche 1-8, **dadurch gekennzeichnet, dass** die benachbarten Siebglieder (15) durch Distanzhülsen voneinander getrennt sind.

11. Siebrechen nach Anspruch 1, **dadurch gekennzeichnet, dass** die Tragstangen (12) ohne Unterbrechung der Gliederketten (9) herausnehmbar und auswechselbar sind.

12. Siebrechen nach Anspruch 1, **dadurch gekennzeichnet, dass** auf jeweils einer Tragestange (12) nebeneinander abwechselnd Siebglieder mit und ohne Austragshaken angeordnet sind.

## Claims

1. Screening grid for removing solid materials from a liquid stream, having a screening belt (5) which can be driven and inserted into the liquid stream and which has two lateral link chains (9) between which supporting rods (10) extend, and which has screening links (15) at least partly provided with hooks (22), all the screening links (15) being divided up into groups of screening links (15) arranged beside one another, and each group of screening links (15) being arranged on two supporting rods (10) independently of the preceding and the following group (14) of screening links (15), and the screening links (15) having link extensions (20) projecting beyond the supporting rods (10), **characterized in that** all the screening links (15) have projecting link extensions (20), which in each case extend away from a group (14) of screening links (15) in only one direction and are arranged without overlapping link extensions (20) of the adjacent group (14) of screening links (15).

2. Screening grid according to Claim 1, **characterized in that** all the screening links (15) of a group (14) are provided with hooks (22) protruding on the outside of the screening belt (5).

3. Screening grid according to Claim 2, **characterized in that** the hooks (22) are formed on the projecting link extensions (20).

4. Screening grid according to Claim 2, **characterized in that** the hooks (22) are formed on the central sections (18) of the screening links (15) which bridge the two supporting rods (12).

5. Screening grid according to Claim 1, **characterized in that** one or more groups of screening links (24) without hooks are arranged between groups (14) of screening links (15) provided with hooks (22).

6. Screening grid according to one of Claims 1-5, **characterized in that** each projecting link extension (20) is designed as a sector of a circle that widens towards the inside of the screening belt (5), the centre (23) of its circular arc lying on the axis of the associated supporting rod (12) .

7. Screening grid according to one of Claims 1-6, **characterized in that** the screening links (15) of adjacent groups (14) are aligned with one another.

8. Screening grid according to one of Claims 1-6, **characterized in that** the screening links (15) of adjacent groups (14) are offset in relation to one another by half the pitch of the screening links (15).

9. Screening grid according to one of Claims 1-8, **characterized in that** the screening links (15) are arranged immediately beside one another on the supporting rods (12) and each have lateral spacer sleeves.

10. Screening grid according to one of Claims 1-8,
**characterized in that** the adjacent screening links (15) are separated from one another by spacer sleeves.

11. Screening grid according to Claim 1, **characterized in that** the supporting rods (12) can be removed and replaced without interrupting the linking chains (9).

12. Screening grid according to Claim 1, **characterized in that** screening links with and without removal hooks are arranged alternately beside one another on a supporting rod (12) in each case.

## Revendications

1. Grille de criblage pour séparer des substances solides d'un flux de liquide, comprenant une bande de criblage (5) pouvant être entraînée, pouvant être insérée dans le flux de liquide, qui présente deux chaînes à maillons latérales (9) entre lesquelles s'étendent des barres de support (10) et qui présente des maillons de criblage (15) pourvus au moins en partie de crochets (22), tous les maillons de criblage (15) étant divisés en groupes de maillons de criblage (15) adjacents et chaque groupe de maillons de criblage (15) étant disposé sur deux barres de support (10) indépendamment du groupe précédent et du groupe suivant (14) de maillons de criblage (15) et les maillons de criblage (15) présentant des projections de maillons (20) saillant au-delà des barres de support (10), **caractérisée en ce que** tous les maillons de criblage (15) présentent des projections de maillons (20) saillantes qui s'étendent à chaque fois uniquement dans une direction depuis un groupe (14) de maillons de criblage (15) et qui sont disposées sans chevauchement avec des projections de maillons (20) du groupe adjacent (14) de maillons de criblage (15).

2. Grille de criblage selon la revendication 1,
**caractérisée en ce que** tous les maillons de criblage (15) d'un groupe (14) sont pourvus de crochets (22) saillant du côté extérieur de la bande de criblage (5).

3. Grille de criblage selon la revendication 2, **caractérisée en ce que** les crochets (22) sont réalisés sur les projections de maillons (20) saillantes.

4. Grille de criblage selon la revendication 2, **caractérisée en ce que** les crochets (22) sont réalisés sur les portions centrales (18) des maillons de criblage (15) qui surmontent les deux barres de support (12).

5. Grille de criblage selon la revendication 1, **caractérisée en ce que** l'on dispose un ou plusieurs groupes de maillons de criblage (24) sans crochets entre des groupes (14) de maillons de criblage (15) pourvus de crochets (22).

6. Grille de criblage selon l'une quelconque des revendications 1 à 5, **caractérisée en ce que** chaque projection de maillon (20) saillante est réalisée sous forme d'un secteur de cercle s'élargissant vers le côté intérieur de la bande de criblage (5), dont le centre de l'arc de cercle (23) se situe dans l'axe de la barre de support (12) associée.

7. Grille de criblage selon l'une quelconque des revendications 1 à 6, **caractérisée en ce que** les maillons de criblage (15) de groupes adjacents (14) sont alignés les uns avec les autres.

8. Grille de criblage selon l'une quelconque des revendications 1 à 6, **caractérisée en ce que** les maillons de criblage (15) de groupes adjacents (14) sont décalés les uns par rapport aux autres d'une demi-division des maillons de criblage (15).

9. Grille de criblage selon l'une quelconque des revendications 1 à 8, **caractérisée en ce que** les maillons de criblage (15) sont disposés directement les uns à côté des autres sur les barres de support (12) et présentent à chaque fois des douilles d'espacement latérales.

10. Grille de criblage selon l'une quelconque des revendications 1 à 8, **caractérisée en ce que** les maillons de criblage (15) adjacents sont séparés les uns des autres par des douilles d'espacement.

11. Grille de criblage selon la revendication 1, **caractérisée en ce que** les barres de support (12) peuvent être enlevées et remplacées sans interrompre la chaîne de maillons (9).

12. Grille de criblage selon la revendication 1, **caractérisée en ce que** l'on dispose à chaque fois sur une barre de support (12) des alternances successives de maillons avec et sans crochets de séparation.
